# EUROPÄISCHE PATENTANMELDUNG

(11) **EP 0 641 947 A2**
(43) Veröffentlichungstag der Anmeldung: **08.03.1995**
(21) Anmeldenummer: 94111022.3
(22) Anmeldetag: 15.07.1994
(51) Int. Cl.: F16D 35/00, F01P 5/12, F01P 7/16, F04D 13/02

(54) **Antriebsvorrichtung für eine Wasserpumpe**

(30) Priorität: 30.07.1993 DE 4325627; 16.10.1993 DE 4335340
(71) Anmelder: Behr GmbH & Co., D-70469 Stuttgart (DE)
(72) Erfinder: Dipl.-Ing. Martin, Hans, D-70191 Stuttgart (DE)
(74) Vertreter: Heumann, Christian

(57) **Zusammenfassung**

Wasserpumpen für die Förderung des Kühlmittels für Brennkraftmaschienen werden über einen Keilriemenantrieb starr angetrieben, d.h. sie sind direkt von der Drehzahl der Brennkraftmaschine abhängig. Die Wasserpumpendrehzahl und damit ihre Förderleistung ist daher nicht immer an den jeweiligen Kühlbedarf der Brennkraftmaschine angepaßt. Das technische Problem besteht hier darin, einen geregelten Wasserpumpenantrieb auf einfache Weise zu schaffen. Die Lösung dieses Problems erfolgt in der Weise, daß das Wasserpumpenrad, d.h. der Impeller, über eine Flüssigkeitsreibungskupplung angetrieben wird. Vorzugsweise ist die Flüssigkeitsreibungskupplung baulich mit dem Wasserpumpenrad integriert. Eine derartige Antriebsvorrichtung für eine Wasserpumpe kann insbesondere für wassergekühlte Brennkraftmaschinen in Kraftfahrzeugen eingesetzt werden.

## Beschreibung

Die Erfindung bezieht sich auf eine Vorrichtung zum Antrieb einer Wasserpumpe, insbesondere für den Kühlmittelkreislauf einer Brennkraftmaschine eines Kraftfahrzeuges, bestehend aus einer Antriebswelle, aus einem Antriebsrad und einem Wasserpumpengehäuse.

Ein derartiger Antrieb für eine Wasserpumpe wurde beispielsweise durch die US-A-4,727,969 bekannt. Die Wasserpumpe weist hierbei ein eigenes Gehäuse auf, welches speziell an das Wasserpumpenrad angepaßt ist, und einen Gehäuseansatz für die Lagerung der Wasserpumpenwelle, die aus diesem Gehäuseansatz herausgeführt ist und eine Riemenscheibe trägt, die von dem Riementrieb motorseitig angetrieben wird. Auf der anderen Seite der Riemenscheibe ist eine Flüssigkeitsreibungskupplung angeordnet, die den Lüfter zur Kühlung der Brennkraftmaschine antreibt und sowohl luft- wie auch wasserseitig geregelt ist, wobei die wasserseitige Regelung durch einen in der Antriebswelle angeordneten Stößel mit endseitig im Wasserpumpengehäuse angeordnetem Thermostat erfolgt. Ein derartiger Antrieb ist starr, d.h. die Drehzahl der Wasserpumpe entspricht jeweils der Motordrehzahl. Dies entspricht nicht immer den Anforderungen an die Wasserpumpe bzw. dem aus thermischen Gründen geforderten Kühlmitteldurchsatz, so daß die Wasserpumpe bei hohen Motordrehzahlen zu schnell dreht, wobei die Gefahr der Kavitation auftritt und unnötige Leistung verbraucht wird.

Es ist Aufgabe der vorliegenden Erfindung, einen Wasserpumpenantrieb vorzusehen, der bei hohen Motordrehzahlen abregelt und damit die Gefahr von Kavitation und Leistungsverlusten vermeidet.

Diese Aufgabe wird durch die kennzeichnenden Merkmale des Patentanspruches 1 gelöst. Die Wasserpumpe wird somit nicht mehr direkt über den Riementrieb, der von der Motordrehzahl abhängig ist, angetrieben, sondern unter Zwischenschaltung einer an sich bekannten Flüssigkeitsreibungskupplung. Diese Kupplung ist in der Lage, bei einer bestimmten hohen Drehzahl abzuregeln, wobei sich dann eine konstante Abtriebsdrehzahl auf der Wasserpumpenseite einstellt. Gemäß einer weiteren Ausgestaltung der Erfindung ist diese Flüssigkeitsreibungskupplung direkt mit dem Wasserpumpenrad zu einem Bauteil integriert und somit im Wasserpumpengehäuse, d.h. im Strömungsbereich des Kühlmittels, untergebracht. Damit ergibt sich neben einer einfachen kompakten Bauweise auch der Vorteil, daß die Flüssigkeitsreibungskupplung direkt durch das Kühlmittel gekühlt ist und somit die Gefahr einer Überhitzung vermieden wird.

Nach einer weiteren vorteilhaften Ausgestaltung der Erfindung ist die Flüssigkeitsreibungskupplung wasserseitig geregelt, d.h. in Abhängigkeit von der Temperatur des Kühlmittels, die durch ein außen an der Kupplung angebrachtes Dehnstoffelement erfaßt und auf den Ventilhebel der Kupplung übertragen wird.

Ferner ist nach einer vorteilhaften Weiterbildung vorgesehen, daß die Kupplung mittels eines Nabenansatzes, einer sogenannten Hohlnabe, einerseits außen in einem Lagersitz des Wasserpumpengehäuses gelagert ist und andererseits im Inneren die Antriebswelle aufnimmt, die nach außen zum Riementrieb geführt ist. Dadurch ergibt sich eine in axialer Richtung außerordentlich kompakt gestaltete Bauweise. Das Wasserpumpengehäuse kann aufgrund dieser Ausbildung an beliebiger Stelle im Fahrzeug, d.h. am Motor oder auch am Fahrgestell befestigt werden - es muß lediglich im Bereich des motorseitigen Riementriebes zum Antrieb der Nebenaggregate liegen.

Schließlich ist in vorteilhafter Weiterbildung der Erfindung vorgesehen, daß auf der Antriebsseite eine Übersetzung ins Schnelle installiert wird, z.B. über den Keilriemenantrieb von der Kurbelwelle auf die Wasserpumpenantriebswelle. Dadurch wird in vorteilhafter Weise erreicht, daß die Wasserpumpe im niedrigen Motordrehzahlbereich eine hinreichend hohe Fördermenge erbringt, während sie in höheren Motordrehzahlbereichen optimal fördert. Hierdurch kann die Kennlinie der Flüssigkeitsreibungskupplung auf der Abtriebsseite an den Kühlungsbedarf der Brennkraftmaschine angepaßt werden.

Vier Ausführungsbeispiele der Erfindung sind in der Zeichnung dargestellt und werden im folgenden näher beschrieben. Es zeigen
- **Figur 1**: den Wasserpumpenantrieb mit einer Flüssigkeitsreibungskupplung, selbstregelnd,
- **Figur 2**: den Wasserpumpenantrieb mit wasserseitiger Temperatursteuerung,
- **Figur 3**: eine weitere Ausführung für den Wasserpumpenantrieb mit Lagerung im Gehäuseansatz und
- **Figur 4**: den Wasserpumpenantrieb nach Figur 3 mit Temperatursteuerung.

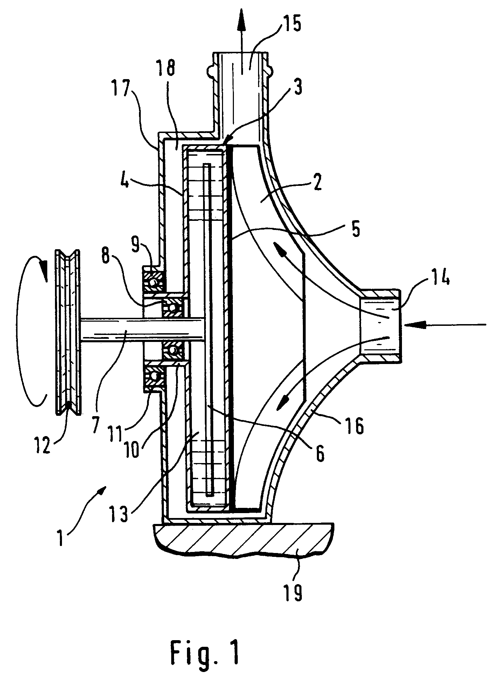

**Figur 1** zeigt in schematischer Darstellung ein Gehäuse 1, welches in sich eine Flüssigkeitsreibungskupplung 3, verbunden mit einem Wasserpumpenrad 2, einem sogenannten Impeller, aufnimmt, wobei die Flüssigkeitsreibungskupplung über eine Antriebswelle 7, die aus dem Gehäuse 1 herausragt, mittels einer Riemenscheibe 12 angetrieben wird. Die Übertragung des Drehmomentes auf das Gehäuse 3 der Flüssigkeitsreibungskupplung erfolgt über eine mit der Antriebswelle 7 befestigte Antriebsscheibe 6, die in einer Arbeitskammer 13, welche mit einem viskosen Medium gefüllt ist, umläuft. Durch die Scherkräfte des viskosen Mediums wird das Drehmoment in an sich bekannter Weise auf das Gehäuse übertragen, welches auf seiner Rückseite 5 den Impeller 2 der Wasserpumpe trägt. Der Impeller ist also mit dem Kupplungsgehäuse 3 zu einem Bauteil integriert. Der Impeller 2 saugt das Kühlmittel des nicht näher dargestellten Kühlmittelkreislaufes der Brennkraftmaschine über den Eintrittsstutzen 14 an und fördert dies über den Austrittsstutzen 15 in den Kreislauf, wobei die Kupplung im Nebenstrom durch einen Strömungsspalt 18 umströmt und damit gekühlt wird. Die Kupplung 3 mit dem Impeller 2 ist über einen Nabenansatz, eine sogenannte Hohlnabe 10 über ein Kugellager 9 in einem Lagersitz 11 des vorderen Gehäuseteiles 17 gelagert. Im Inneren nimmt die Hohlnabe 10 ein weiteres Lager 8 auf, durch welches die Antriebswelle 7 geführt und gelagert wird. Nicht dargestellt sind entsprechende Abdichtungen einerseits des inneren Lagers 8 gegen das Austreten von Silikonöl und andererseits des äußeren Lagers 9 gegen Austreten von Kühlmittel. Das Wasserpumpengehäuse ist stationär gelagert, d.h. beispielsweise umfangseitig am schraffiert dargestellten Motorblock 19 oder auch am Fahrgestell befestigt.

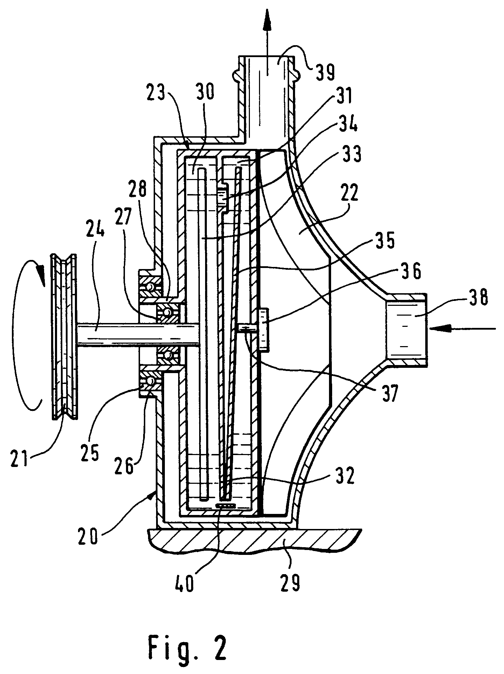

**Figur 2** zeigt eine weitere Variante, wobei lediglich die Flüssigkeitsreibungskupplung 23 als wasserseitig geregelte temperaturgesteuerte Kupplung ausgebildet ist. Ansonsten ist die Bauweise, d.h. die Lagerung, der Antrieb, der Abtrieb der gleiche wie im Ausführungsbeispiel gemäß Figur 1. Das Gehäuse 23 der Flüssigkeitsreibungskupplung weist also einen Arbeitsraum 30 auf, in dem eine Antriebsscheibe 33, verbunden mit der Antriebswelle 24 rotiert. Ferner ist eine Vorratskammer 31 vorgesehen, die durch eine Trennwand 32 von der Arbeitskammer 30 abgeteilt ist und eine Ventilöffnung 34 und eine Rücklauföffnung 40 mit einem nicht dargestellten Staukörper aufweist. Die Ventilöffnung 34 wird durch einen Ventilhebel 35 kontrolliert, der seinerseits über ein auf der Außenseite der Kupplung angeordnetes Dehnstoffelement 36 mittels seines Arbeitskolbens 37 beaufschlagt wird. Das Dehnstoffelement 36 befindet sich im Antrömbereich durch das Kühlmittel und fühlt somit dessen Temperatur. Damit regelt die Flüssigkeitsreibungskupplung direkt in Abhängigkeit von der Kühlmitteltemperatur, wodurch die Förderung des Impellers 22 direkt und verzögerungsfrei an den Kühlbedarf der Brennkraftmaschine angepaßt wird.

Das Gehäuse 20, welches die Flüssigkeitsreibungskupplung 23 und das Wasserpumpenrad 22 aufnimmt, weist einen axial gerichteten Eintrittsstutzen 38 und einen radial gerichteten Austrittsstutzen 39 auf und ist umfangsseitig an einem fahrzeugseitigen Halter 29 (schraffiert dargestellt) befestigt. Die Lagerung von Kupplungswelle 24 und Kupplung 23 erfolgt in gleicher Weise wie beim Ausführungsbeispiel gemäß Figur 1, hier über eine Hohlnabe 28 über die Lager 24 und 25, d.h. in koaxialer Bauweise, wobei die Lager 24 gegen Austreten von Silikonöl und 25 gegen Austreten von Kühlmittel separat abgedichtet werden können.

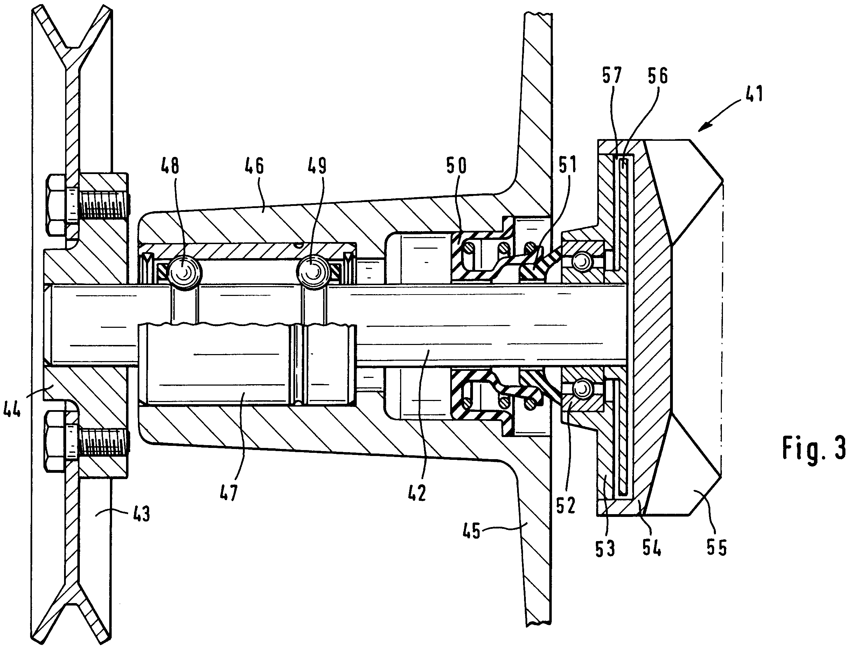

**Figur 3** zeigt den Antrieb für eine Wasserpumpe 41, wie sie für den Kühlkreislauf einer Brennkraftmaschine für Kraftfahrzeuge vorgesehen ist. Diese Wasserpumpe 41 wird über eine Antriebswelle 42 und eine auf dieser mittels Nabe 44 befestigte Keilriemenscheibe 43 über einen nicht dargestellten Keilriemenantrieb von der Kurbelwelle der Brennkraftmaschine angetrieben. Die Antriebswelle 42 ist in einem Gehäuseansatz 46, der aus einer Gehäusewand 45 ausgeformt ist, mittels eines Doppelrillenlagers 47, 48, 49 gelagert und über die Dichtringe 50, 51 zur Wasserseite hin abgedichtet. Die nur teilweise gezeigte Gehäusewand 45 ist also Teil des Wasserpumpengehäuses, in welchem sich das Kühlmittel für den Kühlkreislauf befindet und von der Wasserpumpe 41 gefördert wird. Diese ist in bekannter Weise als Flügelrad oder Impeller mit der Beschaufelung 55 ausgebildet. Erfindungsgemäß erfolgt nun der Antrieb des Flügelrades 55 nicht direkt über die Antriebswelle 42, sondern über eine an sich bekannte Flüssigkeitsreibungskupplung, die mit der Wasserpumpe 41 integriert ist. Dabei befindet sich auf dem Ende der Antriebswelle eine Antriebsscheibe 56, die in einem Arbeitsraum 57 umläuft, der einerseits von der Gehäusewand oder Tragscheibe 54 des Flügelrades 55 und andererseits von einem Deckel 53 gebildet wird, welcher über das Kugellager 52 auf der Antriebswelle 42 gelagert ist. Somit ist also das gesamte Wasserpumpenrad 41, dessen Teile 53, 54, 55 und 56 aus Kunststoff hergestellt sein können, drehbar auf dem Ende der Antriebswelle 42 gelagert und wird über die Antriebsscheibe 56 und über die Scherkräfte eines viskosen Mediums (Silikonöl) angetrieben, welches sich in dem Arbeitsraum 57 befindet und gegenüber dem Wasserraum abgedichtet ist. Das Prinzip der Flüssigkeitsreibungskupplung ist an sich bekannt und wirkt hier - da keine Umlaufsteuerung für das viskose Medium vorgesehen ist - in der Weise, daß die Kupplung abregelt, d.h. bei weiter steigender Antriebsdrehzahl steigt die Abtriebsdrehzahl des Wasserpumpenrades 41 nicht mehr (degressiver Verlauf). Dadurch kann Kavitation an der Beschaufelung 55 vermieden werden.

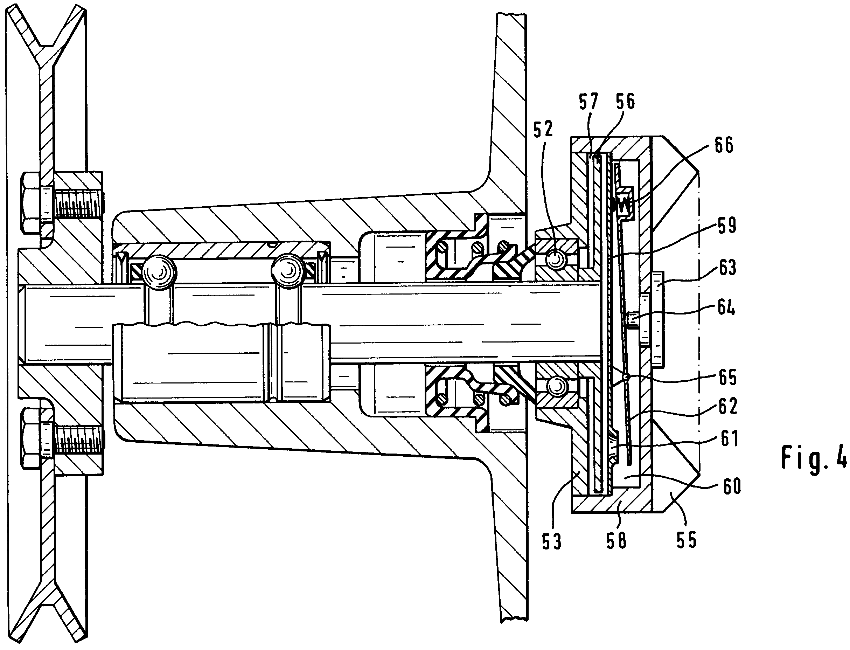

**Figur 4** zeigt eine ähnliche Ausführung wie in Figur 3 mit einer modifizierten Flüssigkeitsreibungskupplung; gegenüber Figur 3 wurden für gleiche Teile gleiche Bezugszahlen verwendet. Antrieb, Lagerung und Abdichtung der Antriebswelle 42 sind somit gleich, während das Gehäuse des Wasserpumpenrades 41 mit der Beschaufelung 55 geändert ist. Im Gegensatz zum Ausführungsbeispiel nach Figur 3 weist das Gehäuse 58 des Wasserpumpenrades 41 nicht nur eine Arbeitskammer 57 für die Antriebsscheibe 56, sondern auch eine Vorratskammer 60 auf, die durch eine Trennwand 59 von der Arbeitskammer 57 getrennt, aber durch eine Ventilöffnung 61 verbunden ist, die über einen Ventilhebel 62 kontrolliert wird. Über einen nicht dargestellten Staukörper und eine Rücklaufbohrung gelangt das viskose Medium (Silikonöl) aus der Arbeitskammer 57 zurück in die Vorratskammer 60 und strömt bei geöffneter Ventilöffnung 61 aus dieser wieder in die Arbeitskammer 57, so daß eine Zirkulation des viskosen Mediums gegeben ist. Die Steuerung des Ventilhebels 62 erfolgt hier über ein Dehnstoffelement 63, welches an sich bekannt und in der Vorderseite des Gehäuses 58 bzw. der Tragscheibe des Impellers fest und dicht angeordnet ist und mit seinem Kolben 64 den Ventilhebel 62 betätigt. Aus Gründen der Bewegungsumkehr ist der Ventilhebel 62 über eine Wippe 65 gegenüber der Trennwand 59 gelagert und wird endseitig über eine Schließfeder (Druckfeder) 66 belastet. Das Dehnstoffelement 63 ragt mit seinem Fühlteil nach außen und wird vom Kühlmittel direkt beaufschlagt, so daß es proportional zur gefühlten Kühlmitteltemperatur den Ventilhebel 62 betätigt. Für den Antrieb bzw. die Drehzahl des Wasserpumpenrades 41 bedeutet dies, daß die Ventilöffnung 61 erst bei Erreichen einer bestimmten Kühlmitteltemperatur voll geöffnet wird und damit die Kupplung zuschaltet, d.h. den Impeller 55 antreibt. Hierdurch wird der Antrieb der Wasserpumpe 41 bei kaltem Kühlmittel unterbunden bzw. nur mit einer definierten Leerlaufdrehzahl betrieben. Die Zu- und Abschaltung der Kupplung erfolgt also kontinuierlich (keine Schwarz/Weiß-, sondern Analogsteuerung). Dadurch wird ebenfalls Motorleistung eingespart.

## Patentansprüche

1. Vorrichtung zum Antrieb einer Wasserpumpe, insbesondere für den Kühlmittelkreislauf einer Brennkraftmaschine eines Kraftfahrzeuges, bestehend aus einer Antriebswelle (7, 24, 42), aus einem Antriebsrad (12, 21, 43) und einem in einem Wasserpumpengehäuse (1, 20, 45) umlaufenden Wasserpumpenrad (2, 22, 41), **dadurch gekennzeichnet**, daß das Wasserpumpenrad (2, 22, 41) über eine Flüssigkeitsreibungskupplung (3, 23, 56, 57) angetrieben wird.

2. Vorrichtung nach Anspruch 1, **dadurch gekennzeichnet**, daß die Flüssigkeitsreibungskupplung (3, 23, 56, 57) innerhalb des Wasserpumpengehäuses (1, 20, 45) angeordnet ist.

3. Vorrichtung nach Anspruch 2, **dadurch gekennzeichnet**, daß die Flüssigkeitsreibungskupplung (3, 23, 53, 56, 57) mit dem Wasserpumpenrad (2, 22, 41, 54, 55) zu einem Bauteil integriert ist.

4. Vorrichtung nach Anspruch 3, **dadurch gekennzeichnet**, daß die Flüssigkeitsreibungskupplung aus einem Kupplungsgehäuse (3, 4, 5, 54, 55) mit einer Arbeitskammer (13, 57) besteht, in der eine Antriebsscheibe (6, 56) in einem viskosen Medium umläuft, die auf der Antriebswelle (7, 42) befestigt ist, auf welcher das Kupplungsgehäuse (3, 10, 55) gelagert ist.

5. Vorrichtung nach Anspruch 4, **dadurch gekennzeichnet**, daß die Flüssigkeitsreibungskupplung (23, 56, 57) zusätzlich eine durch eine Trennwand (32, 59) abgeteilte Vorratskammer (31, 60) aufweist, die über ein Ventil (34, 35, 61, 62) und eine Rücklaufbohrung (40) mit der Arbeitskammer (30, 57) in Verbindung steht und eine temperaturabhängige Steuerung des Ventils (34, 35, 61, 62) aufweist.

6. Vorrichtung nach Anspruch 5, **dadurch gekennzeichnet**, daß die Ventilsteuerung aus einem auf der Rückseite des Kupplungsgehäuses (23, 58) angeordneten Dehnstoffelement (36, 63) besteht, dessen Arbeitskolben (37, 64) auf den Ventilhebel (35, 62) wirkt.

7. Vorrichtung nach einem der vorhergehenden Ansprüche 2 bis 6, **dadurch gekennzeichnet**, daß das Wasserpumpenrad (2, 22, 41) auf der Rückseite der Flüssigkeitsreibungskupplung (3, 23, 54) angeordnet und die Antriebswelle (7, 24, 42) auf der Vorderseite des Kupplungsgehäuses herausgeführt ist.

8. Vorrichtung nach einem der Ansprüche 2 bis 7, **dadurch gekennzeichnet**, daß das Wasserpumpengehäuse (1, 20) an die Form und die Abmessungen der Flüssigkeitsreibungskupplung (3, 23) angepaßt ist und mit dieser einen Strömungsspalt (18) bildet.

9. Vorrichtung nach Anspruch 8, **dadurch gekennzeichnet**, daß der Strömungsspalt (18) im Nebenstrom zum Hauptförderstrom der Wasserpumpe (2, 22) durchströmt wird.

10. Vorrichtung nach einem der vorhergehenden Ansprüche 4 bis 9, **dadurch gekennzeichnet**, daß das Kupplungsgehäuse (3, 23) eine Hohlnabe (10, 28) aufweist, die außen mittels eines Lagers (9, 25) im Wasserpumpengehäuse (11, 1; 26, 20) gelagert und abgedichtet ist und im Inneren die Lagerung (8, 27) und Abdichtung für die Antriebswelle (7, 24) aufnimmt.

11. Vorrichtung nach einem der vorhergehenden Ansprüche 1 bis 10, **dadurch gekennzeichnet**, daß das Wasserpumpengehäuse (1, 20, 45, 46) am Motor oder am Fahrzeug (19, 29) befestigt ist.

12. Vorrichtung nach einem der vorhergehenden Ansprüche, **dadurch gekennzeichnet**, daß auf der Antriebsseite eine Übersetzung ins Schnelle, z.B. 2 : 1 vorgesehen ist.

13. Vorrichtung nach Anspruch 12, **dadurch gekennzeichnet**, daß das Antriebsrad (43) als Keilriemenscheibe ausgebildet ist und die Übersetzung über einen Keilriementrieb von der Kurbelwelle der Brennkraftmaschine auf die Antriebswelle (42) erfolgt.
